**Europäisches Patentamt**

**European Patent Office**

**Office européen des brevets**

(11) Veröffentlichungsnummer: **0 477 399 A1**

## EUROPÄISCHE PATENTANMELDUNG

(21) Anmeldenummer: **90118415.0**

(51) Int. Cl.5: **H04N 9/29**

(22) Anmeldetag: **25.09.90**

(43) Veröffentlichungstag der Anmeldung:
**01.04.92 Patentblatt 92/14**

(84) Benannte Vertragsstaaten:
**AT BE CH DE DK ES FR GB GR IT LI LU NL SE**

(71) Anmelder: **SIEMENS AKTIENGESELLSCHAFT**

Wittelsbacherplatz 2
**W-8000 München 2(DE)**

(72) Erfinder: **Rössler, Werner, Dipl.-Ing.**
**Freischützstrasse 100**
**W-8000 München 81(DE)**

(54) Einrichtung zur Entmagnetisierung einer Bildröhre.

(57) Eine Einrichtung zur Entmagnetisierung einer Bildröhre mit einer am Kolbenrand der Bildröhre angeordneten Entmagnetisierungswicklung sieht ein von einer Steuereinrichtung steuerbares Halbleiterschaltelement vor, durch das der Wechselstrom phasenanschnittgesteuert an die Entmagnetisierungswicklung (1) gelegt wird. Die Ansteuerung des steuerbaren Halbleiterschaltelementes erfolgt derart, daß die Entmagnetisierungswicklung mit einem aus einer Netzwechselspannung gewonnenem und abklingendem Wechselstrom beaufschlagbar ist.

FIG 1

Die Erfindung betrifft eine Einrichtung zur Entmagnetisierung einer Bildröhre mit den Merkmalen des Oberbegriffs des Anspruchs 1.

Aus "Fernsehtechnik ohne Ballast" von Otto Limann, 13. Auflage, Franzis-Verlag, 1979, Seite 308 ist es bekannt, daß trotz sorgfältigster Konvergenzeinstellungen bei Farbbildröhren Farbfehler auf dem Bildschirm entstehen, wenn die Lochmaske und die am Kolbenrand der Bildröhre angeordnete Eisenabschirmung durch Fremdfelder magnetisch wird. Dazu genügt unter Umständen bereits das Magnetfeld der Erde oder nahe am Bildschirm vorbeibewegte Haushaltsgegenstände, wie z. B. Staubsauger. Ein noch so schwaches Magnetfeld an diesen Eisenteilen hat aber die Neigung, die Elektronenstrahlen in der Bildröhre abzulenken, wodurch die erwähnten Farbfehler entstehen.

Um dies zu vermeiden, sieht man für Farbbildröhren eine automatische Entmagnetisierung bei jedem Einschalten des Empfangsgerätes vor. Zu diesem Zweck befindet sich am Kolbenrand der Bildröhre eine Entmagnetisierungswicklung, die über einen ersten Kaltleiter mit der Netzwechselspannung verbunden ist. Beim Einschalten des die Bildröhre enthaltenen Gerätes, insbesondere eines Fernsehgerätes, fließt über diesen Kaltleiter und über die Entmagnetisierungswicklung ein ziemlich hoher Wechselstrom. Der Kaltleiter heizt sich durch den Strom auf, sein Widerstandswert wird größer und der Strom nimmt stetig ab, wie dies für eine wirksame Entmagnetisierung erforderlich ist. Das allein genügt jedoch auf die Dauer nicht, um dann den Strom durch die Entmagnetisierungsspule so klein zu halten, daß das Magnetfeld keine Bildstörungen verursacht. Deshalb ist in engem Wärmekontakt mit dem obenerwähnten Kaltleiter ein zweiter Kaltleiter vorgesehen, der parallel zur Netzwechselspannung liegt. Dieser zweite Kaltleiter erwärmt sich beim Einschalten der Netzwechselspannung ebenfalls und heizt dadurch den ersten Kaltleiter so auf, daß nur noch ein extrem kleiner Strom durch die Entmagnetisierungswicklung fließen kann.

Eine derartige Entmagnetisierungsschaltung für Farbbildröhren wird heute nahezu in jedem Farbfernsehgerät verwendet.

Problematisch bei dieser bekannten Entmagnetisierungsschaltung ist die Tatsache, daß die Kaltleiter und die Entmagnetisierungswicklung bei eingeschaltetem Gerät ständig an der Netzwechselspannung liegen und damit kontinuierlich eine Leistung von etwa 3 Watt verbrauchen, um heiß und damit hochohmig zu bleiben. Dies ist besonders im Stand-by-Betrieb von Fernsehgeräten störend, da in diesem Zustand der Netzschalter geschlossen ist. Die Leistungsaufnahme im Stand-byBetrieb eines Fernsehgerätes kann demnach entgegen der Forderung nach möglichst geringer Leistungsaufnahme nicht beliebig reduziert werden.

Ein weiterer Nachteil bei dieser bekannten Entmagnetisierungsschaltung ist die Tatsache, daß die Entmagnetisierung nur nach einem Einschalten des Netzschalters des Gerätes wirksam ist. Nur beim Einschalten des Gerätes wird ein abklingender Wechselstrom durch die Entmagnetisierungswicklung geschickt. Nachdem sich die Kaltleiter einmal aufgeheizt haben, ist eine Entmagnetisierung der Bildröhre ohne den Netzschalter betätigen zu müssen, nicht mehr möglich. Dies ist insbesondere dann problematisch, wenn sich das Fernsehgerät im Stand-by-Betrieb befindet und ein Störfeld die am Kolben der Bildröhre angeordnete Eisenabschirmung magnetisiert. So ist z. B. beim Einschalten des Fernsehgerätes über eine Fernbedienung aus dem Stand-by-Betrieb eine Entmagnetisierung der Bildröhre nicht mehr möglich.

Der Erfindung liegt die Aufgabe zugrunde, eine Einrichtung zur Entmagnetisierung einer Bildröhre anzugeben, die sich durch eine reduzierte Leistungsaufnahme auszeichnet und auch dann aktivierbar ist, wenn das Fernsehgerät vom Stand-by-Betrieb aus eingeschaltet wird.

Diese Aufgabe wird durch die kennzeichnenden Merkmale des Anspruchs 1 gelöst.

Weiterbildungen der Erfindung sind Gegenstand der Unteransprüche.

Die Erfindung wird im folgenden anhand von drei Figuren näher erläutert. Es Zeigen:

FIG 1 ein erstes erfindungsgemäßes Ausführungsbeispiel der Einrichtung zur Entmagnetisierung einer Farbbildröhre mit einem optisch ansteuerbaren Triac als steuerbares Halbleiterschaltelement, und

FIG 2 Verlauf der Netzwechselspannung und der an der Entmagnetisierungswicklung von FIG 1 anliegenden Spannung bei Phasenanschnittsteuerung durch das steuerbare Halbleiterschaltelement, und

FIG 3 ein zweites Ausführungsbeispiel einer erfindungsgemäßen Einrichtung zur Entmagnetisierung einer Farbbildröhre mit zweigeteilter Entmagnetisierungswicklung.

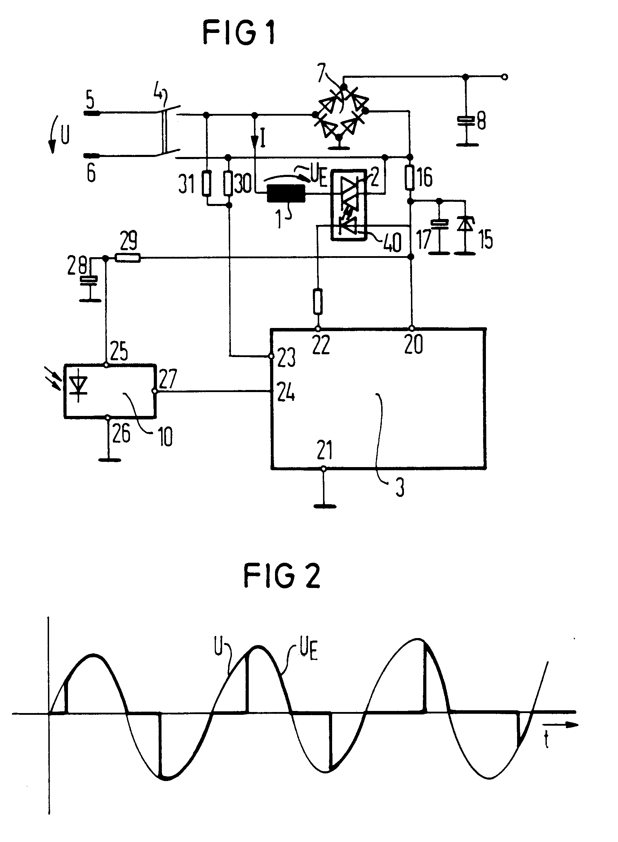

FIG 1 zeigt den prinzipiellen Aufbau der Einrichtung zur Entmagnetisierung einer der besseren Übersichtlichkeit wegen nicht dargestellten Bildröhre eines Farbfernsehgerätes. Die Einrichtung weist zwei Eingangsklemmen 5 und 6 zum Anschluß einer Netzwechselspannungsquelle U auf, welche über eine als Netzschalter wirkende Schalteinrichtung 4 der Reihenschaltung einer Entmagnetisierungswicklung 1 und einem steuerbaren Halbleiterschaltelement 2 zugeführt wird. In diesem Ausführungsbeispiel ist das steuerbare Halbleiterschaltelement 2 ein lichtsteuerbarer Triac.

Parallel zur Reihenschaltung des lichtsteuerbaren Triacs 2 und der Entmagnetisierungswicklung 1 liegen die beiden Eingänge eines Brückengleichrichters 7, zwischen dessen Ausgängen ein Kondensator 8 geschaltet ist, an dem eine gleichgerichtete Spannung zur Versorgung weiterer Schaltungskomponenten des Fernsehgerätes abgreifbar ist.

Der lichtsteuerbare Triac 2 wird impulsweise von Licht, das von einer Leuchtdiode 40 ausgestrahlt wird, angesteuert, wodurch der Triac 2 zünden kann. Dieser Triac 2 schaltet, sofern die Schalteinrichtung 4 geschlossen ist, den Strom I durch die Entmagnetisierungswicklung 1.

Beginnend mit dem Einschalten der Schalteinrichtung 4 wird ein Ansteuerimpuls für den Triac 2 bei jeder Halbwelle der Netzwechselspannung U nach einem Nulldurchgang an eine Ausgangsklemme 22 der Steuereinrichtung 3 abgegeben. Dies geschieht immer mehr verzögert, bis nach etwa 500 msec, d. h. bei einer 50 Hertz-Netzwechselfrequenz nach 50 Halbwellen, der Vorgang beendet ist. Dadurch wird eine Phasenanschnittsteuerung erreicht, wie diese prinzipiell in FIG 2 dargestellt ist. Dort wird die Netzwechselspannung mit U und die an der Entmagnetisierungswicklung 1 abfallende Spannung mit $U_E$ bezeichnet. Ergebnis ist ein durch die Entmagnetisierungswicklung 1 fließender effektiv abklingender Strom, der ein - wie bei der Entmagnetisierung eingangs gefordert - abklingendes Wechselmagnetfeld in der Entmagnetisierungswicklung 1 hervorruft.

Um an den Ausgang 22 der Steuereinrichtung 3 zur Phasenanschnittsteuerung geeignete Impulse anlegen zu können, erhält die Steuereinrichtung 3 an einer Eingangsklemme 23 Informationen über die Nulldurchgänge der Netzwechselspannung U. Dazu ist die Eingangsklemme 23 über möglichst hochohmige Widerstände 31, 30 und die Schalteinrichtung 4 an die Eingangsklemmen 5 und 6 der Netzwechselspannungsquelle U geschaltet. Die Spannungsversorgung für die Steuereinrichtung 3 erfolgt über die Klemmen 20 und 21, wobei die Klemme 21 auf Bezugspotential liegt und die Klemme 20 über einen Widerstand und die Schalteinrichtung 4 an die Eingangsklemme 6 geschaltet ist. Zugleich ist die Klemme 20 der Steuereinrichtung 3 an die Kathode einer Zenerdiode 15 geschaltet, deren Anode auf Bezugspotential liegt. Parallel zu dieser Zenerdiode 15 ist ein Kondensator 17 geschaltet.

Wie oben beschrieben, wird die Entmagnetisierungswicklung 1 mit einem abklingenden Wechselstrom beaufschlagt und zwar unmittelbar nach dem Einschalten der Schalteinrichtung 4. Dies ist immer dann der Fall, wenn das Fernsehgerät vom Aus-Zustand in den Ein-Zustand gebracht wird.

Damit die Bildröhre des Fernsehgeräts aber auch beim Einschalten aus einem Stand-by-Betrieb entmagnetisiert werden kann, weist die Steuereinrichtung 3 einen weiteren Eingang 24 auf, der mit dem Ausgang 27 eines Fernbedienungsempfängers, z. B. eines Infrarot-Vorverstärkers mit nachgeschaltetem Demodulator, verbunden ist. Dieser Fernbedienungsempfänger 10 wird über Klemmen 25 und 26 mit Spannung versorgt, wobei z. B. die Klemme 26 auf Bezugspotential und die Klemme 25 über ein RC-Glied 28, 29 an die Kathode der Zenerdiode 15 angeschlossen ist.

Sobald im Fernsteuerempfänger 10 der Empfang eines Einschaltbefehles einer Fernbedienung detektiert wird, erzeugt die Steuereinrichtung 3 an ihrem Ausgang 22 ein Signal zum wie oben ausgeführt impulsweisen Ansteuern der Leuchtdiode 40, wodurch der lichtempfindliche Triac 2 wieder so gezündet werden kann, daß eine Phasenanschnittsteuerung der Netzwechselspannung gewahrleistet ist. Damit ist es aber dann zum Zwecke der Entmagnetisierung nicht mehr wie beim Stand der Technik notwendig, das Fernsehgerät über die Schalteinrichtung 4 auszuschalten, um dieses anschließend wieder einzuschalten. Vielmehr wird mit der erfindungsgemäßen Einrichtung zur Entmagnetisierung der Bildröhre das Fernsehgerät auch nach einem Einschalten aus dem Stand-by-Betrieb entmagnetisiert.

Sofern die Steuereinrichtung 3 auf Bezugspotential geschaltet ist, wie dies FIG 1 beispielhaft zeigt, ist eine potentialfreie Ansteuerung des steuerbaren Halbleiterschaltelementes 2 notwendig. Diese kann wie in FIG 1 gezeigt, durch eine optische Ansteuerung aber auch durch eine dem Fachmann geläufige Ansteuerung mittels Zündübertrager erfolgen. Als steuerbares Halbleiterschaltelement wären z. B. auch zwei antiparallel geschaltete Thyristoren oder Transistoren einsetzbar.

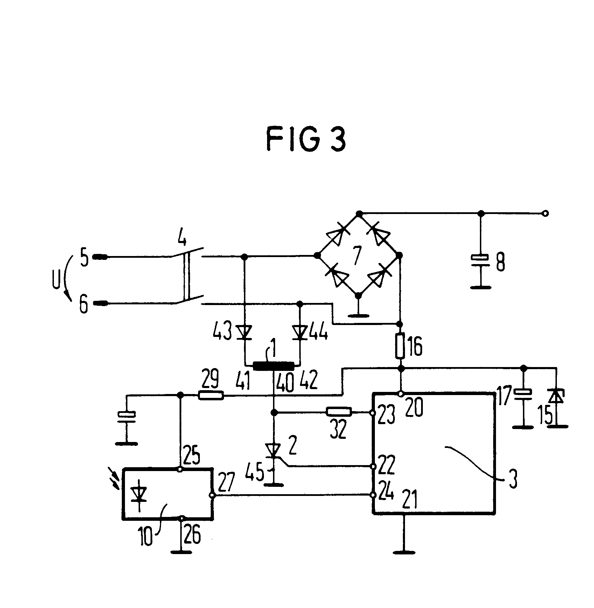

FIG 3 zeigt ein zweites Ausführungsbeispiel einer erfindungsgemäßen Einrichtung zur Entmagnetisierung einer Bildröhre mit einer zweigeteilten Entmagnetisierungswicklung 1a, 1b, deren Mittenanzapfung auf Bezugspotential liegt. Bei dieser Anordnung ist eine potentialfreie Ansteuerung des steuerbaren Halbleiterschaltelementes 2 nicht mehr notwendig. Im einzelnen zeigt FIG 3 eine Einrichtung zur Entmagnetisierung einer Bildröhre, die sich dadurch auszeichnet, daß die Entmagnetisierungswicklung eine Mittelanzapfung und zwei äußere Anschlüsse aufweist, daß die äußeren Anschlüsse an jeweils einen Kathodenanschluß einer Diode angeschlossen sind, deren Anodenanschlüsse über die Schalteinrichtung parallel zu den Klemmen liegen, und daß das steuerbare Halbleiterschaltelement mit seiner Laststrecke zwischen die Mittelanzapfung und ein Bezugspotential geschaltet ist.

**Patentansprüche**

**1.** Einrichtung zur Entmagnetisierung einer Bildröhre mit einer am Kolbenrand der Bildröhre angeordneten Entmagnetisierungswicklung (1), die mit einem aus einer Wechselspannungsquelle (U) gewonnenem und abklingendem Wechselstrom beaufschlagbar ist, **gekennzeichnet** durch ein von einer Steuereinrichtung (3) steuerbares Halbleiterschaltelement (2), durch das der Wechselstrom phasenanschnittgesteuert an die Entmagnetisierungswicklung (1) gelegt wird.

**2.** Einrichtung zur Entmagnetisierung einer Bildröhre nach Anspruch 1, **dadurch gekennzeichnet,** daß die Entmagnetisierungswicklung (1) und das steuerbare Halbleiterschaltelement (2) in Reihe geschaltet und über eine Schalteinrichtung (4) mit Klemmen (5, 6) zum Anschluß der Netzwechselspannungsquelle (U) verbunden sind.

**3.** Einrichtung zur Entmagnetisierung einer Bildröhre nach Anspruch 1, **dadurch gekennzeichnet,** daß die Entmagnetisierungswicklung (1) eine Mittelanzapfung (40) und zwei äußere Anschlüsse (41, 42) aufweist, daß die äußeren Anschlüsse (41, 42) an jeweils einen Kathodenanschluß einer Diode (43, 44) angeschlossen sind, deren Anodenanschlüsse über die Schalteinrichtung (4) parallel zu den Klemmen (5, 6) liegen, und daß das steuerbare Halbleiterschaltelement (1) mit seiner Laststrecke zwischen die Mittelanzapfung (40) und ein Bezugspotential (45) geschaltet ist.

**4.** Einrichtung zur Entmagnetisierung einer Bildröhre nach Anspruch 1 oder 4, **dadurch gekennzeichnet,** daß das steuerbare Halbleiterschaltelement (2) potentialfrei mit der Steuereinrichtung (3) verbunden ist.

**5.** Einrichtung zur Entmagnetisierung einer Bildröhre nach Anspruch 4, **dadurch gekennzeichnet,** daß das steuerbare Halbleiterschaltelement (2) von der Steuereinrichtung (3) mit optischen Mitteln ansteuerbar ist.

**6.** Einrichtung zur Entmagnetisierung einer Bildröhre nach Anspruch 4, **dadurch gekennzeichnet,** daß das steuerbare Halbleiterschaltelement (2) von der Steuereinrichtung (3) über einen Übertrager (7) ansteuerbar ist.

**7.** Einrichtung zur Entmagnetisierung einer Bildröhre nach einem der Ansprüche 1 bis 6, **dadurch gekennzeichnet,** daß das steuerbare Halbleiterschaltelement (2) ein Triac ist.

**8.** Einrichtung zur Entmagnetisierung einer Bildröhre nach Anspruch 5 und 7, **dadurch gekennzeichnet,** daß das steuerbare Halbleiterschaltelement (2) ein lichtempfindlicher Triac ist.

**9.** Einrichtung zur Entmagnetisierung einer Bildröhre nach einem der Ansprüche 1 bis 6, **dadurch gekennzeichnet,** daß das steuerbare Halbleiterschaltelement (2) ein Transistor oder Thyristor ist.

**10.** Einrichtung zur Entmagnetisierung einer Bildröhre nach einem der Ansprüche 1 bis 9, **dadurch gekennzeichnet,** daß die Steuereinrichtung (3) mit einem Fernbedienungsempfänger (10) verbunden ist, wobei die Steuereinrichtung (3) dann das steuerbare Halbleiterschaltelement (1) ansteuert, nachdem ein Fernbedienungsbefehl zum Einschalten der Bildröhre aus einem Stand-by-Betrieb empfangen wird.

# FIG 1

# FIG 2

# FIG 3

| | Europäisches Patentamt | EUROPÄISCHER RECHERCHENBERICHT | Nummer der Anmeldung |
|---|---|---|---|
| | | | EP 90 11 8415 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 831 306  (VOGT ELECTRONIC AG) * Ganze Schrift * | 1,2,4,5, 7-10 | H 04 N 9/29 |
| Y | | 3,6 | |
| | – – – | | |
| Y | US-A-4 262 232  (D.H. WILLIS) * Zusammenfassung * | 3,6 | |
| A | | 1 | |
| | – – – | | |
| X | PATENT ABSTRACTS OF JAPAN, Band 3, Nr. 78 (E-121), 5. Juli 1979; & JP-A-54 056 325 (MATSUSHITA DENKI SANGYO K.K.) 07-05-1979 | 1,2 | |
| | – – – | | |
| X | PATENT ABSTRACTS OF JAPAN, Band 1, Nr. 146 (E-068), 26. November 1977; & JP-A-52 084 919 (SANYO DENKI K.K.) 14-07-1977 | 1,2 | |
| | – – – – – | | |
| | | | **RECHERCHIERTE SACHGEBIETE (Int. Cl.5)** |
| | | | H 04 N |

Der vorliegende Recherchenbericht wurde für alle Patentansprüche erstellt

| Recherchenort | Abschlußdatum der Recherche | Prüfer |
|---|---|---|
| Den Haag | 31 Mai 91 | PIGNIEZ T.J.P. |